# EUROPEAN PATENT APPLICATION

(11) **EP 3 534 497 A1**
(43) Date of publication of application: **04.09.2019**
(21) Application number: 18159251.0
(22) Date of filing: 28.02.2018
(51) Int. Cl.: H02K 1/32, H02K 9/00, H02K 9/19, B23P 11/00, B23P 15/00, F01D 5/08, F01D 25/12, F02B 39/00, F04D 29/58, F16C 3/02

(54) **METHOD FOR PRODUCING A ROTOR SHAFT WITH INTERNAL COOLING SYSTEM**

(71) Applicant: ThyssenKrupp Metalúrgica Campo Limpo Ltda., 13231-900 Campo Limpo Paulista-SP (BR); thyssenkrupp AG, 45143 Essen (DE)
(72) Inventor: Segundo Bellodi, José, 13209-650 Jundiai (BR); Comoli, Adenilson, 13232-411 Campo Limpo Paulista (BR); Gustavo Henrique, Pires, 13.175-653 Sumaré (BR); Pelacani Junior, José Martinho, 13214-206 Jundiai (BR); Quesada Santos, Lucas, 13240-000 Jarinu (BR); Mansano Aparecido, Luciano, 13218-700 Jundiai (BR); Hacker, Patrick Ansgar, 13208-640 Jundiai (BR); Pinezi, Paulo, 13206-030 Jundiai (BR); Canhaci, Valdir, 13255-893 Itatiba (BR)
(74) Representative: Kilchert, Jochen

(57) **Abstract**

The invention relates to a method for producing a rotor shaft, comprising:
- a deforming step wherein a tube, comprising a middle portion (10), a first end portion (12) and a second end portion (14), is deformed such that the first and second end portions (12, 14) are reduced in external diameter;
- an assembling step wherein a cooling member is fitted such that at least part of the cooling member is positioned inside the tube.

## Description

### Background art

A rotor shaft is an essential component for many mechanical systems that rely upon the generation, or transfer, of rotation. Rotor shafts are designed to be capable of rotating at high speeds, usually in systems such as electric motors, turbines and generators. These rotor shafts generally comprise a long tubular (often hollow) body, upon which a number of components such as rotor blades, turbine coils or armature windings are attached.

Due to the electromagnetic effect, the temperature of a rotor shaft can increase greatly during use, which has both short and long term negative effects, such as power loss and excessive wear due to thermal expansion. As such, rotor systems often include features that are designed to "cool" the rotor shaft such that a temperature increase is minimized, thus reducing or eliminating the negative effects that this can induce.

One possible cooling feature is a cooling pipe. The cooling pipe generally extends axially through the middle of the rotor shaft, with an opening present at each end for facilitating the introduction of a coolant into the rotor shaft, thus cooling the shaft from the inside.

For example Patent document US 7579725 B2 relates to a rotor assembly cooling system and method of using same. A portion of the rotor shaft is hollow, the rotor shaft including an open end and a closed end. A coolant feed tube is rigidly attached to the rotor shaft using one or more support members, thus causing the shaft and the feed tube to rotate at the same rate. Coolant is pumped through the feed tube until it exits the end of the feed tube and flows against the inside surface of the closed end of the rotor shaft causing the coolant to change direction and flow back through the coolant flow region, this region being defined as the space between the outer surface of the feed tube and the inner surface of the hollow rotor shaft.

Rotor shafts which implement a cooling pipe tend to comprise a plurality of features. A machined tube, which makes up the main body of the rotor shaft, comprising a large hollow cavity inside, into which the coolant is introduced. The cooling pipe, which is of a narrower diameter, extends into the machined tube, and is held in place by a flange which surrounds the cooling pipe and is attached to the machined tube. Finally the end opposite the end in which the cooling tube is introduced may be closed by a second flange.

These systems therefore comprise a number of individual components which must be preformed and then attached together securely to form the rotor shaft system, thereby increasing the number of manufacturing steps, as well as increasing manufacturing time for assembly.

The problem to be solved by the present invention may therefore be seen as providing a manufacturing method by which a rotor shaft with a cooling pipe is produced, wherein the method reduces the amount of manufacturing time and cost of the present system.

### Summary of the invention

The present invention relates to a method for producing a rotor shaft. The method includes a deforming step wherein a tube, which comprises a middle portion (10), a first end portion (12) and a second end portion (14), is deformed such that the first and second end portions (12, 14) are reduced in external diameter. The method also includes an assembling step wherein a cooling member is fitted such that at least part of the cooling member is positioned inside the tube.

The present invention also relates to a rotor shaft. The rotor shaft comprises a tube which comprises a middle portion (10) and two end portions (12, 14), wherein the end portions (12, 14) each have a smaller external diameter than the middle portion (10), and the tube is formed of a single piece. The rotor shaft also comprises a cooling member positioned such that at least part of the cooling member is positioned inside the tube.

The present invention solves the technical problem outlined above, by allowing a user to manufacture a rotor shaft by a method which reduces the number of manufacturing steps, and requires fewer individual components. By using a single tube, and deforming it such that the ends are narrowed, the flange pieces can be omitted. The insertion of a cooling member into said tube, such that is held securely, further removes the need for the flange pieces. This results in fewer manufacturing steps as only two pieces need to be produced prior to their combination to form the internally cooled rotor shaft. With fewer manufacturing steps, less equipment is needed to form the pieces, and less time is taken during production, hence reducing the manufacturing costs.

Furthermore, flanges generally have to be machined to be the exact shape and size for the tube to which they will attach to form the rotor shaft. By removing the need for flanges to be formed, the method of the present invention also reduces the amount of waste material, especially when the end portions (12, 14) of the tube are reduced by a technique that does not involve the removal of material.

Additionally, due to the reduction of the number of parts, the number of points at which parts are joined together is also reduced. The fewer number of joining points between pieces reduces the number of points at which leaks can occur. The present invention therefore has the added advantage that it reduces the risk of cooling fluid unintentionally leaking from the inside of the rotor shaft, and negatively affecting external components.

### Brief description of the drawings

Figure 1 is a cross sectional view of a tube after the deforming step of the present invention.
Figure 2 is a cross sectional view of a tube and cooling member after the assembling step of the present invention.

### Detailed description of illustrative embodiments

A method of production according to the present invention is described in further detail below.
Firstly, a tube is selected. Said tube may be made of metal, for example, different steel grades or other kind of materials commonly used for rotor shaft manufacturing. The tube may be hollow and comprise a middle portion (10), a first end portion (12) and a second end portion (14). The tube may comprise one or two or more openings (16, 18), wherein an opening (16) is found at least in the first end portion (12).

The tube is subjected to a deforming step, wherein the tube may undergo plastic deformation. Said deformation may comprise the end portions (12, 14) being reduced in diameter. This may ensure that the middle portion (10) remains undeformed, and has a larger external diameter than the end portions (12, 14). As a consequence of this deformation, the internal diameter of the end portions of the tube may also be reduced. Therein the inner diameter of the middle portion (10) may be unchanged, and may be greater than the inner diameter of the end portions. The middle portion (10) of the tube may thus form a chamber (20), into which cooling fluid may be inserted during use of the rotor shaft.

The end portions may be deformed such that they have the same external and/or internal diameter, or may be deformed such that their diameters differ from one another. The deforming step may allow the inner diameter of the first end portion (12) of the tube to be reduced to a specified value, such that the inner diameter of the first end portion (12) of the tube is roughly equal to the outer diameter of at least part of a chosen cooling member to be inserted.

The second end portion may be reduced in diameter such that the internal diameter is reduced. The second end portion may link the chamber to the second opening, such that the second end portion is hollow.

The second end portion (14) may alternatively be reduced in diameter such that at least part of the second end portion (14) is solid, and any added cooling fluid may not pass through the second end portion (14).

The deformation step may involve hot forging, cold forging, or warm forging. The tube may be heated up such that it is in a physical state more appropriate for manipulating by force. This heating may be via an additional step prior to the deforming step, or may be during the deforming step, wherein heat is applied either directly to the tube, or one of more of the tools used for deformation are heated. The forging may be radial forging, wherein a force is applied radially to the portion to be deformed. The end portions (12, 14) may be deformed simultaneously or consecutively.

The forging may involve the tube being pressed between two or more dies, during at least one pressing phase.

The deformation step may use hollow cross rolling process. The hollow cross rolling may use at least one rotating tool, against which the tube is held. The rotating tool may be designed to consider a desired revolved product profile, i.e. the inverse of the external shape that the tube is required to be after the deforming step. The surface of the rotating tool has a surface shape that allows the tube to be deformed in specified areas, for example the end portions (12, 14). Said surface shape may comprise grooves and raised areas. The surface shape may not be circumferentially uniform around the at least two rotating tools, and may be designed to gradually form the desired shape over one rotation in one or more stages. For example, the surface of the at least one rotating tool may comprise one or more narrow ridges, wherein the narrow ridges get wider further around the circumference of the rotating tool. Two of these ridges may be used to reduce the external diameter of the first and second end portions.

The hollow cross rolling is not a negative process, i.e. it does not involve the removal of material, and thus it allows for material costs to be reduced.

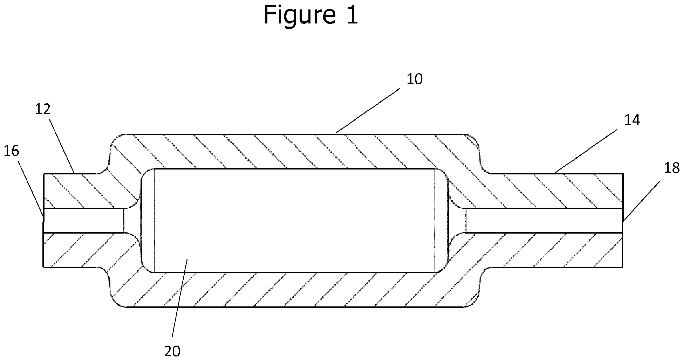

The end of the tube after the deforming step may be seen in Fig. 1.
After the deforming step, an assembling step takes place. The assembling step comprises at least part of the cooling member being inserted into the first end portion (12) of the deformed tube. The cooling member may be inserted such that part of the cooling member remains outside of the tube, whilst part of the cooling member is present in the tube. The part present in the tube may extend into the chamber (20) of the middle portion (10). The cooling member, once inserted, may be held in place against the inner surface of the first end portion (12) of the tube. Due to the wider diameter of the middle portion (10) of the tube, any part of the cooling member which extends into the middle portion (10) may not contact any of the internal surface of the middle portion (10) and may thus be suspended in the chamber (20) of the middle portion (10). The cooling member, once inserted, may be fixed to the tube, and may not be removed from the tube without the application of a large force.

The assembling step may comprise welding. Said welding may involve high levels of heat being applied to the first opening of the tube located in the first end portion of the tube, and the at least part of the cooling member. The materials of both components may be melted together such that when they cool they are securely joined.

The assembling step may comprise skiving. The cooling member and tube may be deformed (e.g. by machining) such that at one or more protrusion is present on the cooling member, while a corresponding number of recess' are present on the inner surface of the first end portion (12) of the tube. The two pieces may then be connected together via the insertion of the one or more protrusions into the corresponding recess' during the insertion step. Alternatively, the one or more recess' may be provided on the outer surface of the cooling member, whilst the corresponding number of protrusions may be provided on the inner surface of the first end portion (12) of the tube.

The assembling step may comprise press fitting. Press fitting allows the cooling member and tube to be held together via friction after the two parts are pressed together. The cooling member outer diameter may be larger than the inner diameter of the first end portion (12) of the tube. Preferably the difference in diameter is very small. A force is applied to the cooling member such that it enters the tube, despite being of a larger diameter. Therein the friction between the two parts due to this diameter difference allows the pieces to be held together.

To aide in the insertion of the cooling member, the cooling member may be at least partly angled such that a portion of the end to be inserted is narrower than the inner diameter of the first end portion (12) of the tube. Furthermore, due to the expansion of most materials when heated, the tube may be heated (or may still be heated from the deforming step) such that the cooling member may be inserted and the tube may shrink when cooled to form a tight fit. Alternatively (or in combination), the cooling member may be cooled prior to insertion, such that it can expand once inserted to form a tight fit.

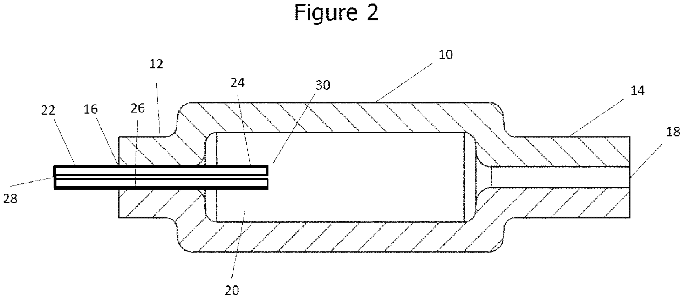

The rotor shaft after the assembling step may be seen in figure 2.
After the assembling step, one or more finishing steps may take place. Said finishing steps may modify the rotor shaft (deformed tube and cooling member now fixed together), such that the finished rotor shaft meets required dimensions.

The finishing steps may comprise machining. The rotor shaft may be machined such that the outer surfaces are suitable for attachment to other features. Said machining process may be turning, whereby the rotor shaft is rotated whilst a cutting tool removes material from the rotor shaft. The machining process may be spline profile machining, whereby a number of ridges or teeth are produced on the outer surface of the rotor tool. These ridges may be produced longitudinally along the outer surface of at least part of the rotor tool. These ridges may mesh with grooves in a mating piece, and aide in the transfer of torque. The machining may comprise oil grooves boring wherein by the removal of material from the rotor shaft, oil grooves may be produced. The machining may comprise threading wherein one or more portions of the rotor shaft have material removed thereby creating a screw thread.

The finishing steps may comprise thermal (heat) treatment. The thermal treatment may comprise quenching, wherein the rotor shaft is rapidly cooled to obtain certain material properties. The thermal treatment may comprise tempering, wherein the rotor shaft is heated to a predetermined temperature and then allowed to cool in still air.

The finishing steps may comprise grinding, an abrasive machining process that uses a grinding wheel to remove material.
The method steps outlined above provide a manufacturing process that lead to a rotor shaft according to the present invention. A rotor shaft according to the present invention is described below.

The rotor shaft comprises a tube, wherein the tube comprises a middle portion (10) and two end portions (12, 14). The end portions (12, 14) each have a smaller external diameter than the middle portion (10). The tube is formed of a single piece. The rotor shaft further comprises a cooling member. The cooling member is positioned such that at least part of the cooling member is positioned inside the tube.

The tube may be considered monolithic in that it is formed of a single part, and is not a combination of multiple pieces joined together. This has the advantage of reducing the manufacturing costs, enhancing some mechanical properties when compared to multiple pieces rotor shafts and reducing the possible areas where leaks may occur. The first and second end portions (12, 14) may have different or the same external diameters.

The cooling member may be of a substantially cylindrical shape. The cooling member may have a passageway (26) through which cooling fluid may pass. Said passageway (26) may have a first opening (28) in the end face of a first end portion (22) of the cooling member, and extend axially through the center of the cooling tube towards a second end portion (24) of the cooling member. At least one second opening (30) of the passageway (26) may be found in the second end portion (24) of the cooling member.

Said second opening (30) may be formed in the longitudinal and/ or vertical surface of the cooling tube such that the passageway (26) is not completely straight and the cooling fluid may exit the cooling member at the second opening (30) of the cooling member.

The passageway (26) may allow for cooling fluid to be transferred from outside of the deformed tube to the inside of the deformed tube, preferably the middle portion (10). The cooling fluid may then aid in preventing the rotor shaft from overheating.

The cooling fluid may leave via the second end portion (14) of the deformed tube, or an additional exit path for the cooling fluid may be formed. The cooling fluid may flow on to cool additional components in a rotor system such as the stator.

### List of reference numerals

- 10: Tube middle portion
- 12: Tube first end portion
- 14: Tube second end portion
- 16: Tube first opening
- 18: Tube second opening
- 20: Tube chamber
- 22: Cooling member first end portion
- 24: Cooling member second end portion
- 26: Cooling member passageway
- 28: Cooling member first opening
- 30: Cooling member second opening

## Claims

1. A method for producing a rotor shaft, comprising:
- a deforming step wherein a tube, comprising a middle portion (10), a first end portion (12) and a second end portion (14), is deformed such that the first and second end portions (12, 14) are reduced in external diameter;
- an assembling step wherein a cooling member is fitted such that at least part of the cooling member is positioned inside the tube.

2. The method for producing a rotor shaft according to claim 1, wherein the deforming step comprises either hot forging or cold forging or radial forging.

3. The method for producing a rotor shaft according to claim 1, wherein the deforming step is a hollow cross rolling process.

4. The method for producing a rotor shaft according to any of claims 1-3, wherein the deforming step reduces the inner diameter of the first end portion (12) of the tube to be roughly equal to an outer diameter of at least part of the cooling member.

5. The method for producing a rotor shaft according to any of claims 1-4, wherein the assembling step allows for the cooling member to be fixed relative to the tube via contact with the tube.

6. The method for producing a rotor shaft according to any of claims 1-5, wherein the assembling step comprises welding.

7. The method for producing a rotor shaft according to any of claims 1-6, wherein the assembling step comprises skiving.

8. The method for producing a rotor shaft according to claim 7, wherein skiving comprises forming at least one protrusion on one of an outer surface of the cooling member, or an inner surface on the tube, and further forming a corresponding number of recess' in the other of the outer surface of the cooling member, or an inner surface on the tube.

9. The method for producing a rotor shaft according to any of claims 1-8, wherein the assembling step comprises press fitting, wherein preferably press fitting comprises the cooling member being inserted into the tube, and the friction between the tube and cooling member holding the tube and cooling member together.

10. The method for producing a rotor shaft according to any of claims 1-9, wherein at least part of the cooling member is positioned in the middle portion (10) of the tube.

11. The method for producing a rotor shaft according to any of claims 1-10, further comprising a finishing step.

12. The method for producing a rotor shaft according to claim 11, wherein the finishing step comprises final machining, wherein preferably the final machining comprises turning and/or spline profile machining and/or oil grooves boring and/or threading.

13. The method for producing a rotor shaft according to any of claims 11-12-, wherein the finishing step comprises thermal treatment wherein preferably the thermal treatment comprises quenching and/or tempering.

14. The method for producing a rotor shaft according to any of claims 11-13, wherein the finishing step comprises grinding.

15. A rotor shaft comprising:
- a tube comprising a middle portion (10) and two end portions (12, 14) wherein the end portions (12, 14) each have a smaller external diameter than the middle portion (10), and the tube is formed of a single piece;
- a cooling member positioned such that at least part of the cooling member is positioned inside the tube.
